Europäisches Patentamt

European Patent Office

Office européen des brevets

(11) Veröffentlichungsnummer : **0 398 232 B1**

(12) # EUROPÄISCHE PATENTSCHRIFT

(45) Veröffentlichungstag der Patentschrift :
**27.10.93 Patentblatt 93/43**

(51) Int. Cl.⁵ : **B65D 88/74, A23L 3/3418**

(21) Anmeldenummer : **90109073.8**

(22) Anmeldetag : **14.05.90**

(54) **Behälter zum temperierten und klimatisierten Transport verderblicher Güter.**

(30) Priorität : **16.05.89 DE 3915925**

(43) Veröffentlichungstag der Anmeldung :
**22.11.90 Patentblatt 90/47**

(45) Bekanntmachung des Hinweises auf die
Patenterteilung :
**27.10.93 Patentblatt 93/43**

(84) Benannte Vertragsstaaten :
**AT BE CH DE ES FR GB GR IT LI LU NL SE**

(56) Entgegenhaltungen :
**EP-A- 0 224 469**
**EP-A- 0 315 309**
**AU-B- 578 027**
**CA-A- 1 193 233**
**DE-U- 8 810 984**

(73) Patentinhaber : **GRAAFF Gesellschaft mit
beschränkter Haftung
Heinrich-Nagel-Strasse 1
D-31008 Elze (DE)**

(72) Erfinder : **Graaff, Wolfgang, Dipl.-Ing.
Hohnsen 36
D-3200 Hildesheim (DE)**

(74) Vertreter : **Walter, Helmut, Dipl.-Ing.
Aubinger Strasse 81
D-81243 München (DE)**

## Beschreibung

Seit langem bekannt sind temperierte Transportbehälter, insbesondere sogenannte Kühlcontainer. Dabei handelt es sich im Zusammenhang mit der vorliegenden Erfindung um relativ große Behälter in der Form liegender Quader und genormter Abmessungen. Der einen Stirnseite eines solchen Behälters ist das Temperieraggregat als komplette, funktionsfähige Einheit zugeordnet, die von den Herstellern der Behälter von Zulieferanten bezogen und dem weitgehend fertigen Behälter zugeordnet werden, indem lediglich die notwendigen funtionellen und mechanischen Verbindungen hergestellt werden.

Bei den Temperieraggregaten handelt es sich wiederum um in ihren Abmessungen genormte Baugruppen und nur selten passen die Normmaße von Behältern und Temperieraggregaten optimal zusammen. Die Temperieraggregate werden in die eine Behälterstirnwand in der Weise eingesetzt, daß sie sich symmetrisch zwischen zwei stirnseitigen Eckpfosten der Behälter befinden und die Bereiche zwischen dem zweiteiligen Temperieraggregat und den Eckpfosten der zugehörigen Stirnwand mit Verkleidungsblechen geschlossen werden. Diese Seitenverkleidungen sind entsprechend den anderen Wänden der Behälter isolierende Doppelwandabschnitte mit einer Isolierschicht zwischen zwei Deckblechen (Sandwichkonstruktionen), wobei die Isolierschicht häufig ein in dem Bereich zwischen den Deckblechen liegender, an Ort und Stelle hergestellter Starrschaum ist. Gegebenenfalls werden Hohlraumabschnitte gebildet, die zur Luftführung herangezogen werden.

Bei den in temperierten Behältern transportierten Gütern handelt es sich meist oder zumindest häufig um "Südfrüchte". Mit dem Transport solcher hochempfindlicher Produkte über immer größere Entfernungen und die Einbeziehung immer empfindlicherer Produkte steigen die Anforderungen an die Transportbedingungen und die temperierten Behälter werden in zunehmendem Maße auch klimatisiert. Temperieraggregate werden nach wie vor zur Bestimmung der Temperatur im Behälterinneren herangezogen, zusätzliche Klimatisierungsgeräte sorgen für eine angemessene Luftzusammensetzung, Feuchtigkeit und dergleichen. Bei diesen Klimatisierungsgeräten handelt es sich ebenfalls um vorgefertigte Aggregate, die in funktionsfähigem Zustand angebaut werden, oder sie werden aus den einzelnen Komponenten außen oder innen dem Behälter zugefügt und miteinander verschaltet. Werden sie außen am Behälter angebracht, so müssen besondere Maßnahmen zu ihrem Schutz gegen Witterung und Beschädigung vorgesehen werden. Werden sie im Behälter angeordnet, so sind ebenfalls besondere Maßnahmen zu ihrem Schutz gegen Beschädigung vorzusehen und sie beeinträchtigen außerdem den Nutzraum des Behälters. Die bisherigen Verwendungsarten sind in jedem Fall Anlaß, möglichst ohne Klimatisierung auskommen zu wollen oder die Klimatisierungsvorrichtung nur mit den notwendigen Bestandteilen zu versehen, statt eine optimale Betriebsweise und/oder Klimatisierung anzustreben.

In DE-U-88 10 984.4 ist eine Vorrichtung zur Erzeugung einer künstlichen Atmosphäre in einem Transportbehälter beschrieben bei der ein Kühlaggregat, in der hier verwendeten Terminologie ein "Temperieraggregat", und ein Stickstoffgewinnungsaggregat, in der hier verwendeten Terminologie ein "Klimatisierungsaggregat", in einem gemeinsamen Gehäuse untergebracht sind, das in seiner Gesamtheit dem Behälter lösbar zugeordnet ist. Eine solche Anordnung vereinigt also zwei im Regelfall vorgefertigte Aggregate in einem Gesamtaggregat, womit eine gewisse Starrheit gegeben ist und Bereiche nicht genutzt werden können, die von kleineren Aggregaten durchaus genutzt werden könnten, der Platzbedarf ist also bei solchen Lösungen erfahrungsgemäß relativ groß. AU-B-30381/84 beschreibt demgegenüber die übliche Zuordnung eines Kühlaggregates zu der einen Stirnseite eines Großcontainers.

Aufgabe der Erfindung ist es nun, einen gattungsgemäßen Behälter so auszubilden, daß eine optimale Temperierung und Klimatisierung möglich ist, der bauliche Aufwand sich in vertretbaren Grenzen hält und Nutzraum allenfalls in geringem Maße beeinträchtigt werden muß.

Die erfindungsgemäße Lösung der Aufgabe ergibt sich aus den Patentansprüchen und der nachfolgenden Beschreibung eines Ausführungsbeispieles der Erfindung anhand der Zeichnung.

Wichtig für die Möglichkeit der Realisierung der Erfindung ist, daß in ihrer Gesamtheit kleine Aggregate für eine genügende Klimatisierung ausreichen. Hierzu wiederum ist eine entsprechende Behälterbauweise hilfreich, wozu insbesondere gehört, daß der jeweilige Behälter insgesamt gegen Einflüsse von außen gut zu schützen ist. Ein wesentlicher Punkt der Erfindung ist deshalb ein Behälter, bei dem ein möglichst geringer unkontrollierter Mediumaustausch zwischen innen und außen erfolgt. Als bevorzugter Anwendungsfall der Erfindung wird deshalb ein hermetisch verschließbarer Behälter bzw. ein Behälter mit einem ausschließlich zwangsweise gesteuerten Klima- bzw. Atmosphärenaustausch vorgesehen.

In der Zeichnung zeigen

Fig. 1    eine Ansicht auf die eine Stirnseite eines erfindungsgemäß ausgerüsteten Behälters, dem das Temperieraggregat zugeordnet ist;

Fig. 2    den einen Eckenbereich des Behälters der Figur 1 im Bereich der Stirnseite, die in Figur 1 als Stirnansicht dargestellt ist;

Fig. 3    den in Figur 2 als Horizontalschnitt dargestellten Bereich als perspektivische Darstellung vom Inneren des Behälters aus gesehen und

Fig. 4       als Blockdiagramm die zur Anwendung kommende Klimatisierungseinrichtung.

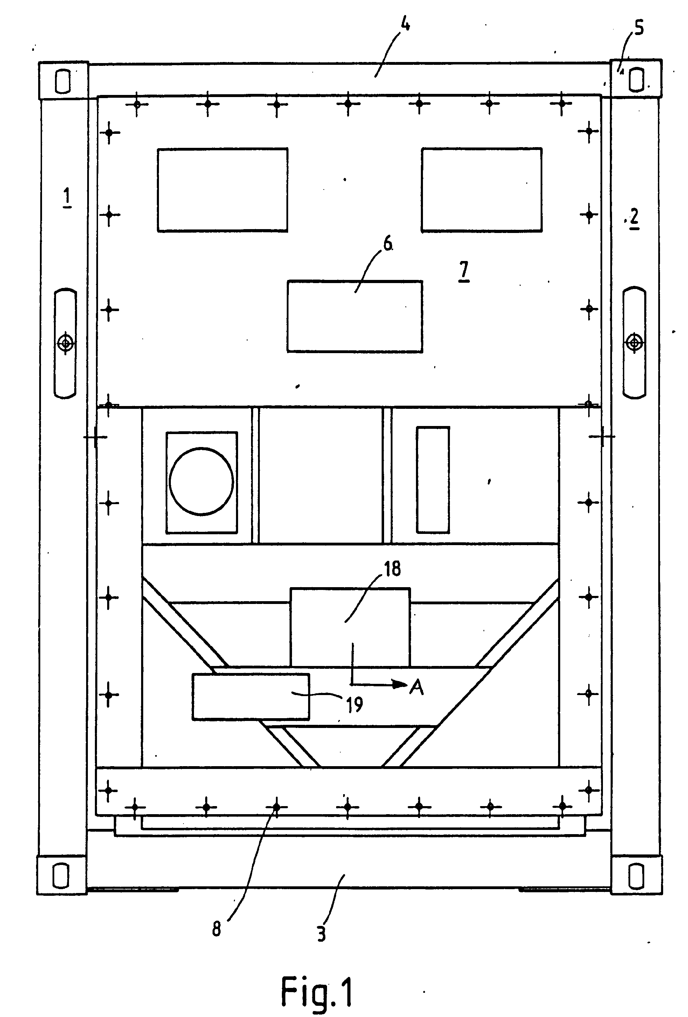

Gemäß Fig. 1 ist die eine Stirnseite eines genormten Großbehälters, der die Form eines liegenden Quaders hat, durch die beiden seitlichen vertikalen Eckpfosten 1,2, den unteren Querträger 3 und dem oberen Querträger 4 gekennzeichnet. Die üblichen, ebenfalls genormten und untereinander zumindest gleichartigen Eckbeschläge sind mit 5 bezeichnet. Die einzelnen Bestandteile des Temperieraggregates sind durch Rechtecke 6 gekennzeichnet und einer gemeinsamen Grundplatte 7 zugeordnet. Diese Grundplatte 7 mit den anmontierten Teilen 6 ist der Behälterstirnwand innerhalb des von den Eckpfosten 1,2 und den Querträgern 3,4 umschriebenen Bereiches zugeordnet und mit Schraub- oder Nietverbindungen 8 gehalten.

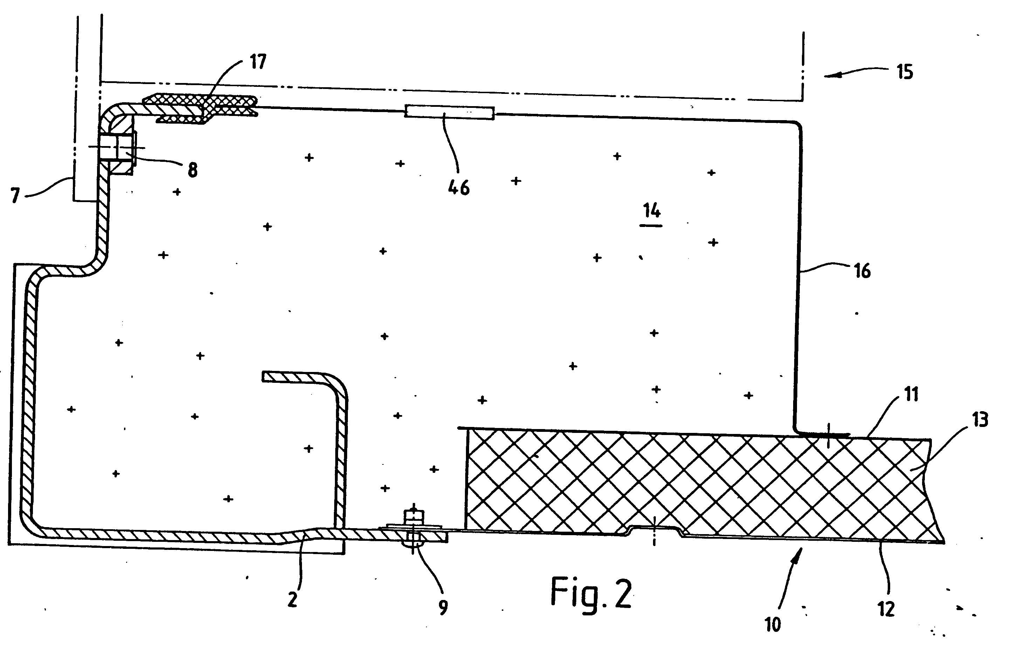

Gemäß Fig. 2 ist jede der Ecksäulen 1,2 ein offenes Winkelprofil, an deren einem Flansch die Platte 7 mit einer angemessenen Anzahl von Verbindungselementen, beispielsweise Schraubverbindungen 8 gehalten, beispielsweise angeschraubt ist. Mit Verbindungselementen, beispielsweise Nietverbindungen 9 ist die eine Seitenwand 10 an dem dargestellten Eckpfosten (Ecksäule) 2 befestigt und sie ist ersichtlich eine Sandwichkonstruktion mit den beiden Deckplatten 11,12 und dem zwischen diesen angeordneten, großflächig mit ihnen verbundenen Stütz- und Isolierkörper 13 vorzugsweise aus einem im Bereich zwischen den Deckplatten aufgeschäumten Starrschaum. Bei bisher üblichen Bauweisen bleibt im Bereich der Eckpfosten ein Raum zwischen dem jeweiligen Eckpfosten 2, der jeweiligen Seitenwand 10 und dem in Fig. 2 in seiner Gesamtheit mit 15 bezeichneten Temperieraggregat frei, der mit einem Blech 16 abgedeckt und mit einem Starrschaum 14 ähnlich dem Starrschaum 13 ausgeschäumt ist, um keine Temperaturbrücke entstehen zu lassen. Es handelt sich um einen kaminartigen Raum zwischen Boden- und Dachbereich des Behälters zu beiden Seiten des Temperieraggregates. Wiederum zur Vermeidung von Temperaturbrücken ist das Winkelblech 16 an dem Eckpfosten 2 über eine Gummileiste 17 angeschlossen.

Erfindungsgemäß wird nun der Bereich, der bei konventionellen Lösungen mit Starrschaum ausgefüllt ist, dazu benutzt, Komponenten der Klimatisierungseinrichtung aufzunehmen, wobei es sich bei der allgemein üblichen symmetrischen Anordnung des Temperieraggregates zwischen den beiden Eckpfosten um die Bereiche zu beiden Seiten des Temperieraggregates, um einen dieser Räume oder um einen Raum zwischen Temperieraggregat und einem Eckpfosten handeln kann, nachdem das Temperieraggregat soweit es die baulichen Gegebenheiten zulassen an den anderen Eckpfosten dieser Behälterstirnwand herangerückt ist. Diese Variante hat den Vorteil, daß ein relativ großer zusammenhängender Raum zur Aufnahme von Komponenten der Klimatisiereinrichtung zur Verfügung steht. Um bei der Unterbringung der Komponenten der Klimatisierungseinrichtung in größtmöglichem Maße flexibel zu sein, wird bei allen geschilderten Varianten der Anordnung des Temperieraggregates zwischen den Eckpfosten der zu einer solchen Klimatisierungseinrichtung gehörende Kompressor von der übrigen Klimatisierungseinrichtung räumlich getrennt in dem Bereich untergebracht, der dem Temperieraggregat zur Verfügung steht bzw. von diesem beansprucht wird. Bei einer Reihe von handelsüblichen Temperieraggregaten steht dieser Platz von Haus aus zur Verfügung, ohne bisher genützt zu werden. Untersuchungen von handelsüblichen, hier infrage kommenden Temperieraggregaten haben jedoch gezeigt, daß mit relativ geringen Veränderungen, insbesondere einer geringfügigen Verlagerung des Kompressors 18 des Temperiergerätes zumindest der Platz geschaffen werden kann, der für die Aufnahme des Kompressors 19 der Klimatisierungseinrichtung benötigt wird, bzw. mit geringen Veränderungen der für die benötigten zusätzlichen Aggregate notwendige Platz geschaffen werden kann.

In Fig. 1 ist der Kompressor 18 des Temperieraggregates 15 so angeordnet, daß der Kompressor 19 der Klimatisierungseinrichtung nicht ohne weiteres im Bereich des Temperieraggregates untergebracht werden könnte. Der Pfeil A kennzeichnet jedoch die Möglichkeit, durch geringfügige Verlegung des Kompressors 18 auf der Platte 7 des Temperieraggregates ausreichend Platz zu schaffen, um auch den Kompressor 19 der Klimatisierungsreinrichtung auf der Platte 7 anordnen zu können.

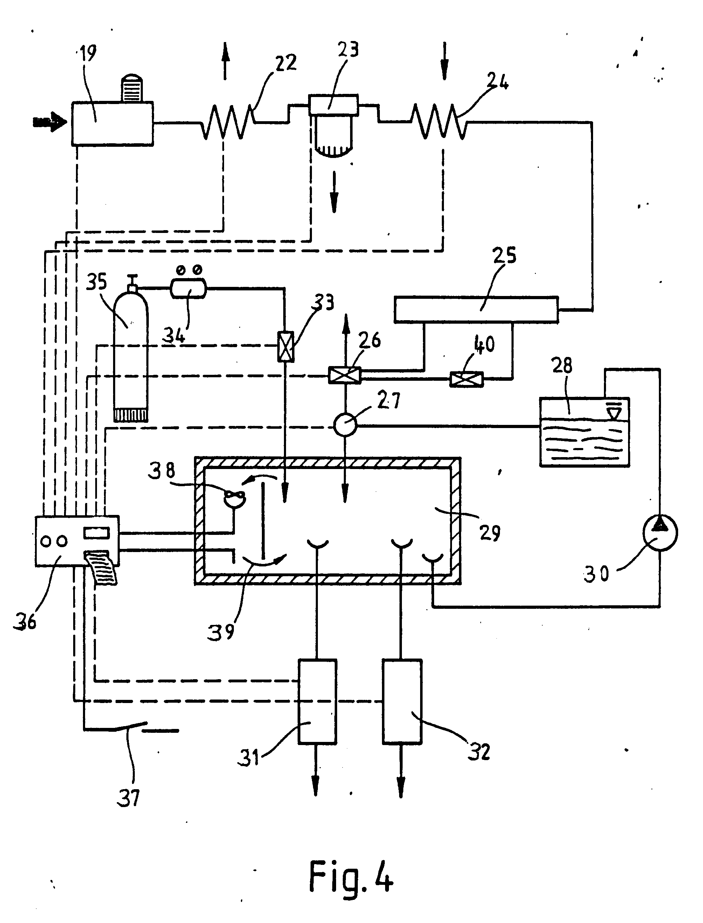

Da mit dem Raum bzw. den Räumen seitlich vom Temperieraggregat ein kaminartiger, d.h. relativ langgestreckter Raum zur Verfügung steht, ist es möglich, ohne zusätzlichen Einbauraum, der Klimatisierungseinrichtung einen Separator 25 zuzuordnen, der notwendigerweise ein relativ langgestrecktes rohrförmiges Bauteil ist, dessen Unterbringung bisher immer Probleme bereitet hat und auf den deshalb bisher im Regelfall verzichtet wurde. Da aber für eine gute Klimatisierung sowohl Sauerstoff als auch Stickstoff, jedoch in vom Transportgut abhängigem Verhältnis zueinander benötigt werden, werden bei bisherigen temperierten und klimatisierten Behältern Sauerstoff und Stickstoff in flüssiger Form in Flaschen mitgeführt, was aufwendig und umständlich ist. Bei Anwendung eines Separators können dagegen Sauerstoff und Stickstoff aus der Umgebungsluft des Behälters durch Zerlegen dieser Umgebungsluft gewonnen werden. Es müssen also keine besonderen Flaschen für Sauerstoff bzw. Stickstoff mitgeführt werden, die Platz benötigen würden und das Totgewicht des Behälters erhöhen würden. Eine demzufolge erfindungsgemäße Klimatisierungseinrichtung ist in Fig. 4 als Blockschaltbild dargestellt, worin die einzelnen Teile die nachfolgend wiedergegebene Bedeutung haben, wobei die Funktion nicht näher beschrieben wird, weil es sich um eine übliche Einrichtung handelt mit der Aus-

EP 0 398 232 B1

nahme, daß in die Einrichtung ein Separator 25 eingeschaltet ist, dem über den Kompressor 19 und die nachgeschalteten Komponenten 22 bis 24 Umgebungsluft zugeführt wird, um in ihm im wesentlichen in Sauerstoff und Stickstoff zerlegt zu werden, die für die Klimatisierung unterschiedlicher Produkte in unterschiedlichem Verhältnis zueinander benötigt werden und bei der Erfindung nach dem Trennen im Separator 25 in unterschiedlichem, d.h. an den jeweiligen Bedarfsfall angepaßtem Verhältnis wieder zusammen gebracht zu werden. U.a. dieses Verhältnis wird in dem Rechner 36 als Steuereinheit der Klimatisierungseinrichtung 20 bestimmt.

Erläuterung Klimatisierungseinrichtung des Blockschaltbildes gemäß Fig. 4.

| 19 | Kompressor | 31 | $CO_2$ "Scrubber" |
|----|------------|----|-------------------|
| 22 | Kühler | 32 | Äthylen "Scrubber" |
| 23 | Filter | 33 | Ventil |
| 24 | Heizung | 34 | Druckminderer |
| 25 | $N_2/O_2$ Separator | 35 | $CO_2$-Flasche |
| 26 | Ventil | 36 | Computer (Rechner) |
| 27 | Befeuchter | 37 | Türschalter |
| 28 | Wassertank | 38 | Gebläse |
| 29 | Container | 39 | Luftumwälzung durch Kühlaggregat |
| 30 | Wasserpumpe | 40 | Drossel |

Sollte aus irgendwelchen Gründen mit dem Sauerstoff- und/oder Stickstoffgehalt der Umgebungsluft nicht auszukommen sein, so kann der nicht aus der Umgebungsluft mittels des Separators 25 zu gewinnende Teil aus mitgeführten Flaschen gedeckt werden, die jedoch in wesentlich geringerer Anzahl mitgeführt werden müssen, als wenn der gesamte Stickstoff- und/oder Sauerstoffbedarf aus einer großen Anzahl Flaschen mit entsprechend größerem Platzbedarf gedeckt werden müßte.

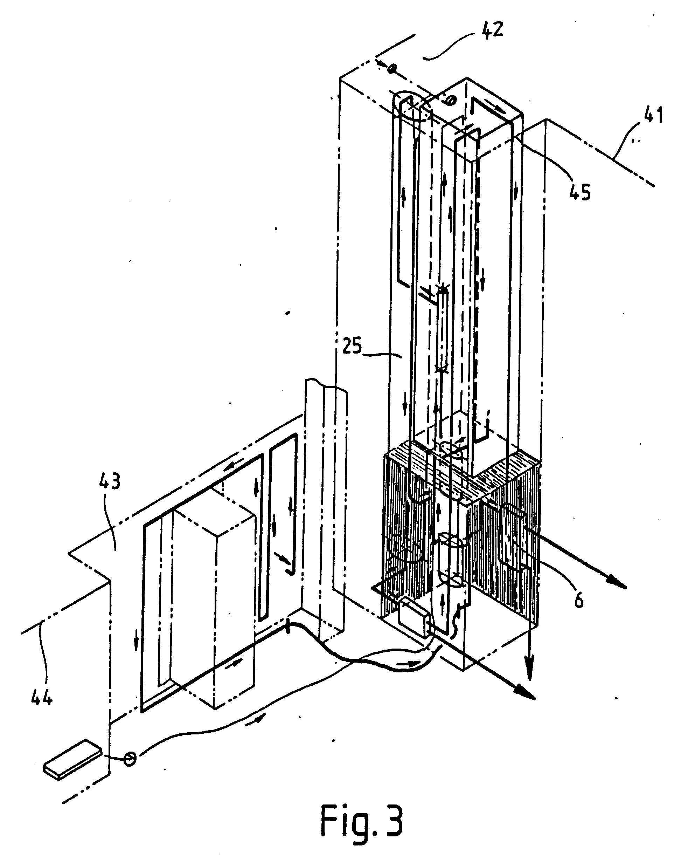

Aus Fig. 3 ist ersichtlich, wie sich der Bereich seitlich vom Temperieraggregat als aufrechtstehender kaminartiger Raum darstellt, in dem der notwendigerweise langgestreckte Separator 25 gut untergebracht werden kann. Der Bereich seitlich vom Temperieraggregat stellt sich als von der eigentlichen Seitenwand (Linienzug 41) nischenartig zurückspringender Raum 42 dar, in der der eine Eckpfosten des Behälters und Bestandteile der Klimatisierungseinrichtung in sinnvoller und zweckmäßiger Zuordnung zueinander untergebracht sind. Gegebenenfalls kann zur Aufnahme einzelner Bestandteile der Klimatisierungseinrichtung auch auf der anderen Seite des Eckpfostens ein nischenartiger Bereich 43 in der Behälterseitenwand (Linienzug 44), insbesondere im unteren Wandbereich genützt werden. Die funktionelle Verschaltung der Bestandteile der Klimatisierungseinrichtung untereinander bietet keine Probleme, weil sie im Bereich des Eckpfostens nahe beieinander liegen. Im gegebenen Fall, d.h. bei symmetrischer Anordnung des Temperieraggregates in der Stirnwandmitte kann zu beiden Seiten des Temperieraggregates eine entsprechende, kleinere Klimatisierungseinrichtung untergebracht werden. Im Fall seitlicher Versetzung des Temperieraggregates kann eine entsprechend größere Klimatisierungseinrichtung im Bereich des größeren Abstandes zwischen Temperieraggregat und Klimatisierungseinrichtung in der beschriebenen Weise untergebracht werden.

Da die Bestandteile der Klimatisierungseinrichtung gewartet werden müssen, sollten sie ohne besonderen Aufwand zugänglich gemacht werden können. Hierzu sind in den Begrenzungswänden der Nische 42 Klappen oder Deckel angeordnet. Um in deren Anordnung möglichst geringen Einschränkungen unterworfen zu sein, um sie insbesondere auch in der Seitenwand 45 der Nische 42 anordnen zu können, ist das Temperieraggregat 15 mit seiner Aufnahmeplatte 7 um Scharniere mit lotrechter Schwenkachse schwenkbar gelagert. Diese Scharniere sind am Eckpfostenbereich angeordnet, der bei einseitiger Unterbringung der Klimatisierungseinrichtung der der Klimatisierungseinrichtung abgekehrte Eckpfostenbereich ist, so daß Klappen bzw. Deckel in der Nischenseitenwand 45, die in der Darstellung der Fig. 2 der eine Abschnitt des Winkelbereiches 16 ist, bei abgeschwenktem Temperieraggregat zugänglich sind. Eine solche Klappe, ein solcher Deckel oder dergleichen ist in Fig. 2 schematisch wiedergegeben und mit dem Bezugszeichen 46 bezeichnet.

Insbesondere soll es sich bei dem für die erfindungsgemäße Ausbildung vorgesehenen Behälter um einen absolut gegen ungewollten Atmosphärenaustausch dicht verschließbaren Behälter handeln. Die Verbindungsbereiche zwischen den Seitenwänden, dem Dach und dem Boden sollen absolut dicht isolierend sein, ebenso

4

EP 0 398 232 B1

wie die Wände, das Dach und der Boden optimale Isoliereigenschaften haben sollen. Wichtig ist, daß ein solcher Atmosphärenaustausch auch bei geschlossenen Türen im Türbereich zuverlässig verhindert bzw. allenfalls bewußt gesteuert möglich ist. Bei einem solchen Behälter ist eine relativ kleinvolumige Temperier- und Klimatisiereinrichtung möglich und die Teile dieser Einrichtung können kleinvolumig und entsprechend zweckmäßig unterbringbar sein, was insbesondere auch für den Separator 25 in langgestreckter, zylindrischer Form gilt.

Bei der erfindungsgemäß bevorzugten Lösung ist der Separator 25 vertikal angeordnet. Denkbar sind aber auch Fälle, in denen der Separator 25 in horizontaler Lage über oder unter dem Temperiergerät angeordnet ist.

Ersichtlich ist bei der Erfindung der Separator einerseits von besonderer Bedeutung für die Klimatisierung, andererseits eine besonders sperrige und platzbrauchende Einrichtung. Es muß deshalb das Bestreben sein, den Separator bei geringer Größe möglichst wirkungsvoll zu halten. Voraussetzung hierfür ist die Verwendung der Erfindung bei einem von Haus aus besonders dichten Behälter, der keine unkontrollierten bzw. nur gesteuerte Verbindungen zur Umgebung hat. Ein besonderer Schwachpunkt unter diesem Aspekt sind die Türen, die Großbehälter im allgemeinen zum Be- und Entladen des Behälters aufweisen und die deshalb bei einem erfindungsgemäßen Behälter besonders dicht schließend zugeordnet sind.

Ein abschließender Vorschlag besteht deshalb in der Verwendung der erfindungsgemäß ausgestalteten Klimatisierungseinrichtung bei einem hermetisch gegen die Umgebung, insbesondere auch in Türbereichen, abschließenden bzw. absperrbaren bzw. mit dieser nur gesteuert in Verbindung stehenden Behälter.


## Patentansprüche

1. Behälter zum Transport verderblicher Güter, wobei dem im wesentlichen quaderförmigen Behälter im Bereich seiner einen Stirnseite unter Bildung einer lösbar dem Behälter zugeordneten Baugruppe ein Klimatisierungsaggregat und ein Temperieraggregat zugeordnet sind und das Temperieraggregat einen Separator zum Zerlegen der Umgebungsluft im wesentlichen in Sauerstoff und Stickstoff aufweist, von dem aus der Stickstoff in den Behälter eingebracht wird, **dadurch gekennzeichnet**, daß die Baugruppe vom Temperieraggregat gebildet wird, während das Klimatisieraggregat aus funktionell miteinander verbundenen aber baulich selbständig dem Behälter im Bereich zwischen der Baugruppe des Temperieraggregates, einem oder den Eckpfosten seitlich vom Temperieraggregat sowie oberem und unterem Längsträger des Behälters angeordneten Bauteilen besteht, wobei der Separator als schlanke, lauggestreckte Einheit nach außen gegenüber einer Seite des Temperieraggregates versetzt angeordnet ist.

2. Behälter nach Anspruch 1, **dadurch gekennzeichnet,** daß ein Kompressor (19) der Klimatisierungseinrichtung baulich dem Temperieraggregat zugeordnet ist.

3. Behälter nach Anspruch 1 oder 2, **dadurch gekennzeichnet,** daß der Separator (25) aufrechtstehend im Bereich zwischen Temperieraggregat und einer Ecksäule im Bereich des Temperieraggregates angeordnet ist.

4. Behälter nach einem der Ansprüche 1 bis 3, **dadurch gekennzeichnet,** daß das Temperieraggregat um eine Schwenkachse an einem vertikalen Rand gegenüber dem Behälter schwenkbar ist.

5. Behälter nach einem der Ansprüche 1 bis 4, **dadurch gekennzeichnet,** daß die Bestandteile der Klimatisierungseinrichtung hinter Verkleidungswänden angeordnet und durch Öffnungen zugänglich sind, die durch Klappen, Verschlußplatten, Schieber oder dgl. verschließbar sind.

6. Behälter nach einem der Ansprüche 1 bis 5, **gekennzeichnet** durch eine Zuordnung von Temperiergerät und Komponenten der Klimatisierungseinrichtung derart, daß Temperierung und Klimatisierung unabhängig voneinander bewirkbar sind.

7. Behälter nach einem der Ansprüche 1 bis 6, **gekennzeichnet** durch einen ausschließlich gesteuerten Atmosphärenaustausch zwischen innen und außen.

8. Behälter nach Anspruch 1 oder 2, **dadurch gekennzeichnet,** daß der Separator (25) liegend im Bereich über oder unter dem Temperieraggregat angeordnet ist.

9. Behälter nach einem der Ansprüche 1 bis 8, **dadurch gekennzeichnet**, daß er insbesondere auch im Türbereich dicht schließt und sein Innenraum mit der Umgebung nur über exakt definierbare Luftführungen in Verbindung steht.

**Claims**

1. A container for the transportation of perishable goods, an air-conditioning unit and a temperature-control unit being associated with the substantially cuboid container in the region of one of its end faces so as to form a sub-assembly releasably associated with the container, and the temperature-control unit has a separator for separating the ambient air basically into oxygen and nitrogen, from which the nitrogen is introduced into the container, characterised in that the sub-assembly is formed by the temperature-control unit whereas the air-conditioning unit consists of functionally interconnected components which are structurally disposed independently of the container in the region between the temperature-control unit sub-assembly, one or the corner posts laterally of the temperature-control unit and top and bottom longitudinal members of the container, the separator being arranged as a slender elongate unit offset in the outward direction relatively to one side of the temperature-control unit.

2. A container according to claim 1, characterised in that a compressor (19) of the air-conditioning device is structurally associated with the temperature-control unit.

3. A container according to claim 1 or 2, characterised in that the separator (25) is disposed upright in the region between the temperature-control unit and a corner column in the region of the temperature-control unit.

4. A container according to any one of claims 1 to 3, characterised in that the temperature-control unit is pivotable relatively to the container about a pivot axis on a vertical edge.

5. A container according to any one of claims 1 to 4, characterised in that the components of the air-conditioning device are disposed behind panels and are accessible through openings closable by means of flaps, closure plates, slides or the like.

6. A container according to any one of claims 1 to 5, characterised by the temperature-control device and components of the air-conditioning device being so associated with one another that temperature-control and air-conditioning can be effected independently of one another.

7. A container according to any one of claims 1 to 6, characterised by an exclusively controlled atmosphere exchange between the inside and outside.

8. A container according to claim 1 or 2, characterised in that the separator (25) is disposed horizontally in the region above or below the temperature-control unit.

9. A container according to any one of claims 1 to 8, characterised in that it closes hermetically, particularly in the door zone as well, and its interior communicates with the surroundings only by way of exactly definable air guides.

**Revendications**

1. Conteneur pour le transport de marchandises périssables, dans lequel un groupe de climatisation et un groupe de conditionnement en température sont associés de manière démontable en tant que module, au conteneur sensiblement en forme de parallélépipède, dans la zone d'une de ses faces frontales, le groupe de conditionnement en température comportant un séparateur pour la décomposition de l'air environnant essentiellement en oxygène et en azote, l'azote étant introduit dans le conteneur à partir du séparateur, caractérisé en ce que le module est formé par le groupe de conditionnement en température, tandis que le groupe de climatisation est composé d'éléments de construction reliés fonctionnellement mais associés de manière indépendante au conteneur, en étant disposés dans la zone entre le module formé par le groupe de conditionnement en température et le ou les montants d'angle situés latéralement au groupe de conditionnement en température, ainsi qu'entre le longeron supérieur et le longeron inférieur du conteneur, le séparateur en tant qu'unité étroite, de forme allongée, étant disposé de manière à être décalé vers l'extérieur par rapport à un côté du groupe de conditionnement en température.

2. Conteneur selon la revendication 1, caractérisé en ce qu'un compresseur (19) du dispositif de climatisation est associé, par construction, au groupe de conditionnement en température.

3. Conteneur selon la revendication 1 ou 2, caractérisé en ce que le séparateur (25) est disposé en position debout, dans la zone entre le groupe de conditionnement en température et un montant d'angle dans la zone du groupe de conditionnement en température.

4. Conteneur selon l'une des revendications 1 à 3, caractérisé en ce que le groupe de conditionnement en température peut pivoter par rapport au conteneur, autour d'un axe de pivotement sur un bord vertical.

5. Conteneur selon l'une des revendications 1 à 4, caractérisé en ce que les éléments constitutifs du dispositif de climatisation sont disposés derrière des parois de capotage et sont accessibles par des ouvertures, qui peuvent être fermées par des volets, des plaques de fermeture, des coulisses ou analogues.

6. Conteneur selon l'une des revendications 1 à 5, caractérisé par une association du groupe de conditionnement en température et de composants du dispositif de climatisation, telle, que le conditionnement en température et la climatisation puissent s'effectuer indépendamment l'un de l'autre.

7. Conteneur selon l'une des revendications 1 à 6, caractérisé par un échange exclusivement contrôlé de l'atmosphère, entre l'intérieur et l'extérieur.

8. Conteneur selon la revendication 1 ou 2, caractérisé en ce que le séparateur (25) est disposé de manière couchée dans la zone au-dessus ou en-dessous du groupe de conditionnement en température.

9. Conteneur selon l'une des revendications 1 à 8, caractérisé en ce qu'il ferme de manière étanche, également dans la zone de la porte, et en ce que son espace intérieur est en communication avec l'environnement, uniquement par l'intermédiaire de conduites d'air pouvant être définies de manière précise.

Fig.1

Fig. 2

EP 0 398 232 B1

Fig. 3

Fig.4